# EUROPEAN PATENT APPLICATION

(11) **EP 4 789 538 A1**
(43) Date of publication of application: **12.08.2026**
(21) Application number: 25382097.1
(22) Date of filing: 06.02.2025
(51) Int. Cl.: A01K 61/95

(54) **FISH ESTIMATION APPARATUS FOR COUNTING FISH**

(71) Applicant: Argosai Smart Aquaculture, SL, 08026 Barcelona (ES)
(72) Inventor: MARTÍN ROMÁN, Héctor, 08013 BARCELONA (ES); JORDÀ CAMPOS, Carlos, 08914 BADALONA (ES)
(74) Representative: ZBM Patents - Zea, Barlocci & Markvardsen

(57) **Abstract**

Fish estimation apparatus for counting fish (1), the apparatus comprising: an inlet (10) for feeding fish into the apparatus; an outlet (11) for discharging fish from the apparatus; a sliding platform (12) connecting the inlet and the outlet, wherein the sliding platform is configured to allow fish to slide by gravity from the inlet and the outlet; the sliding platform wherein comprises a length (12A) and a width (12B), the length being defined along a direction from the inlet to the outlet; two side walls (12C, 12D) extending in the length direction, the width of the sliding platform being defined by the two side walls; and an unobstructed sliding surface spanning the width of the sliding platform and configured to allow unrestrained movement of fish in the length direction and in the width direction of the sliding platform; the apparatus further comprising a video camera (13) arranged overlooking the sliding platform such that the field of view of the video camera spans across the whole width of the unobstructed sliding surface; and a controller device configured to obtain a video sequence from the video camera; and to determine an estimation of a number of fish sliding along the sliding platform, based on the obtained video sequence. A method for estimating fish comprises the steps of providing such a fish estimation apparatus; providing fish at the inlet of the apparatus; and estimating a number of fish sliding down the sliding platform.

## Description

### FIELD OF THE INVENTION

The present disclosure relates to an apparatus and method for estimating the number of fish passing through the apparatus.

### BACKGROUND

Fish counting in fish farms located inland is mostly performed out of water, and there are mainly two possible counting scenarios: when the fish is unloaded from a truck into a pool, or when it is transported from a first pool into a second or further pools. In both cases, counting has been known to be done by hand between the truck and the pool or the two pools. Typically, fish are counted manually by operators using a tray disposed between the two pools, the tray having a plurality of holes of different sizes to classify the fish by size into one or more pools.

Prior solutions may include apparatuses for counting fish in fish farms located inland. These apparatuses may, however, be limited in their capacity of processing large amounts of fish in a short time interval and have a low counting accuracy. A fish counting method is needed to decrease the time spent counting fish and increase the efficiency of the functioning of the fish farms located inland.

### SUMMARY

In a first aspect, a fish estimation apparatus for counting fish is provided. The apparatus comprises:
- an inlet for feeding fish into the apparatus;
- an outlet for discharging fish from the apparatus;
- a sliding platform connecting the inlet and the outlet, wherein:
   - the sliding platform is configured to allow fish to slide by gravity from the inlet and the outlet;
   - the sliding platform comprises:
      ▪ a length and a width, the length being defined along a direction from the inlet to the outlet;
      ▪ two side walls extending in the length direction, the width of the sliding platform being defined by the two side walls;
      ▪ an unobstructed sliding surface spanning the width of the sliding platform and configured to allow unrestrained movement of fish in the length direction and in the width direction of the sliding platform; and
- a video camera arranged overlooking the sliding platform such that the field of view of the video camera spans across the whole width of the unobstructed sliding surface; and
- a controller device configured to:
   - obtain a video sequence from the video camera; and
   - determine an estimation of a number of fish sliding along the sliding platform, based on the obtained video sequence.

By using the presently disclosed apparatus, an alternative to the fish counting apparatus of the state of the art is provided, which enhances the versatility and scalability of existing apparatuses, and increases efficiency and accuracy of the fish counting.

The presently disclosed apparatus may be used while performing a fish transfer between two or more pools by, for example, using pumps to propel the fish into the inlet of the apparatus, forcing the fish to pass through the sliding platform, and redirecting the fish to a further pool or pools through the outlet of the apparatus. The apparatus may also be used, in another example, when fish are being discharged from a tank of a vehicle (for example, a truck carrying the fish) into one or more pools.

An unobstructed sliding surface may be defined as a surface which does not impede the movement of fish thereon. In particular, which does not impede the movement of fish in the direction between the side walls. The movement of fish in the direction between the side walls may be understood in the present disclosure as an absence of guiding elements (also referred to as channels). The absence of channels or guides on the sliding surface of the sliding platform allows free movement of any size of fish across the width and/or along the length direction of the sliding surface, simplifying the estimation of the number of fish regardless of their size and/or their trajectory or path through the sliding platform. Furthermore, it allows free movement of a plurality of fish at the same time.

When travelling through the sliding platform, fish tend to move along the platform in close contact, or in contact with the surface of the platform, from the inlet to the outlet by the effect of gravity. Thus, depending on, for example, the size of the fish or the speed at which the fish enter the inlet of the apparatus, fish can cluster or congregate in parts of the unobstructed sliding platform. However, when different sized fishes enter the apparatus, they can still be correctly counted even if they are nearby each other, or even slightly superposed (i.e., partly one on top of the other). Therefore, by allowing such unrestrained, i.e., free or unguided, movement along the unobstructed sliding surface of the sliding platform, a higher ratio of fish per time unit can be counted.

Furthermore, by arranging the video camera overlooking the sliding platform in such a way that the field of view of the video camera spans across the whole width of the unobstructed sliding surface, the viewable area imaged by the lens of the camera is not affected by shadows produced by elements such as obstructions, e.g., protruding guides, or guiding walls, placed on the unobstructed sliding surface. Also, the video sequence obtained by the camera covers the whole width of the unobstructed sliding surface, assuring that no fish is out of field, and thus unaccounted for.

In an example, the unobstructed sliding surface allows unrestrained movement of fish in all the length direction of the sliding platform. In another example, the unobstructed sliding surface allows unrestrained movement of fish in all the width direction of the sliding platform.

In an example, the optical axis of the camera is substantially perpendicular to at least part of the sliding surface. The majority of fish grown in fish farms tend to have a flat dimension along their length, the length of fish being defined from mouth to tail. Therefore, when sliding down the sliding surface due to gravity, fish tend to arrange with their flat dimension parallel to the surface of the sliding platform. Thus, by arranging the optical axis of the camera substantially perpendicular to the sliding surface, the camera is able to obtain a video sequence which substantially captures the most recognizable dimension of fish, enabling a more efficient estimation of if the video sequence comprises a single fish or a superposition or accumulation of several fish on the sliding surface.

Furthermore, because fish tend to slide in close contact, or in contact, with the sliding platform, the distance from the camera lens to the passing sliding fish can be considered approximately constant regardless of the camera arrangement. Therefore, the video sequence captured by the video camera comprises frames with information, which is substantially in a two-dimensional plane, and thus a single video camera allows the estimation of the number of fish; in other words, there is no need to use a stereo video camera to estimate the number of fish (i.e., there is no need to measure depth on the obtained video sequence). This results in a decrease of the computational time of the fish estimation calculation.

In an example, the determining of an estimation of the number of fish is performed by a machine learning algorithm pretrained to estimate a number of fish based on a training data set of video sequences of fish, the machine learning algorithm performing the estimation of the number of fish using the obtained video sequence as an input data set.

The sliding surface allows, for example, the superposition of fish along the path from the inlet to the outlet of the apparatus (i.e., fish may partially mount on top of others while sliding along the sliding platform). Thus, the unobstructed sliding surface provided in the present apparatus does not guide the fish in any specific trajectory when travelling through the sliding platform. However, the superposition or accumulation of the fish in specific parts of the sliding surface does not decrease the efficiency of the machine learning algorithm when performing the estimation of the number of fish. Furthermore, the absence of guiding elements enhances the performance of the machine learning algorithm, since the video sequence does not have unwanted elements like shadows produced by guides or walls arranged on the sliding surface.

In an example, the machine learning algorithm is an Object Detection type Machine Learning Algorithm (ODML). ODML type algorithms are a type of computer vision algorithm specifically designed to identify and locate objects within an image or video. It not only classifies objects into predefined categories (e.g., person, car, dog) but also determines their positions in the form of bounding boxes. This dual task of classification and localization sets object detection apart from standard image classification, and makes them specially useful for detecting passing objects such as fish through a sliding platform, as performed by the presently disclosed apparatus.

In an example, Tracking Algorithms (e.g., SORT, Deep SORT) are used to assign unique IDs to fishes, ensuring the same fish isn't counted multiple times. By combining an ODML algorithm with object tracking, a reliable counting can be achieved over frames of a video sequence.

In an example, the sliding platform has an inclination of at least 5° relative to a surface substantially perpendicular to the gravity direction. Such inclination helps the fish to move at a speed within acceptable ranges enabling the estimation of the number of fish. Furthermore, the inclination allows a flow of falling water to slide through the sliding platform, both when using a pump to bring the fish up to the inlet of the apparatus, or when unloading fish from a truck tank. Flow of water along the sliding platform enables a steady movement of fish thereon, decreasing the number of fish stalling midway between the inlet and the outlet. The flow of water also helps avoiding blockage of the outlet by stalled fish near the end of the sliding platform (i.e., near the outlet), which could also cause further overlapping of fish further up the platform, in the sliding surface overlooked by the camera. Furthermore, such flow of water decreases the amount of time the fish is out of a water environment, and thus decreases the harm to the fish.

In an example, the video camera has a focal length of 35mm or shorter. A wide-angle type lens has a focal length of 35mm or shorter. Such wide-angle lens enables to capture a wide field of view. The wider the field of view, the more of the scene is included in the captured frame.

In an example, the sliding surface is arranged at a distance from the inlet, the distance being at least a third of the length of the sliding platform. This way, a dispersion of the fish along the sliding platform is achieved by means of gravity and the flow of water entering the inlet. Furthermore, the probability of fish overlapping is decreased substantially when the fish reach the sliding surface, thus increasing the efficiency of the estimation of the number of fish.

In an example, the apparatus further comprises a cleaning device configured to clean the lens of the video camera. The cleaning device may comprise, for example, a wiper or brush. The wiper or brush may be configured or arranged to periodically clean the lens of the video camera. Alternatively, the cleaning device may comprise a jet of air acting as a barrier for drops which can splash from the sliding platform due to the passing of the fish and/or the flow of water. The jet of air can point, for example, perpendicular to the lens, thus blocking drops splashing the lens.

In a second aspect, a method for estimating fish is provided, the method comprising the steps of:
- providing a fish estimation apparatus as previously disclosed;
- providing fish at the inlet of the apparatus;
- estimating the number of fish sliding down the sliding platform.

In order to estimate fish, a plurality of fish may be provided at the inlet of the apparatus. Furthermore, the estimation of the number of fish may be performed by means of the controller of the fish estimation apparatus.

In an example, the method for estimating fish also comprises estimating the biomass of the estimated fish, the estimation of the biomass comprising the steps of:
- Obtaining a set of frames from the obtained video sequence, the set of frames corresponding to the estimated fish;
- Calculating an area of the obtained frames corresponding to the estimated fish;
- Estimating the biomass of the estimated fish based on the calculated area.

The area of the obtained frames corresponding to the estimated fish may be understood as the area in which the fish is depicted within each frame.

In an example, the calculating of an area of the obtained frames is performed by counting the number of pixels of one or more of the frames of the set of frames, the pixels corresponding to the estimated fish.

In an example, the estimating of the biomass of the estimated fish is performed using a regression model. The regression model can be, for example, a machine learning algorithm pretrained to estimate biomass of fish based on a training data set of frames of fish, the corresponding area and weight of the fish, the machine learning algorithm performing the estimation of biomass using the obtained set of frames as an input data set.

### BRIEF DESCRIPTION OF THE DRAWINGS

Non-limiting examples of the present disclosure will be described in the following, with reference to the appended drawings, in which:
Figure 1 depicts an exploded view of a fish estimation apparatus 1 according to an example of the present disclosure.
Figure 2 depicts a cross-section of the fish estimation apparatus 1 of the example of figure 1.
Figure 3 depicts a diagram block of an example of a method for estimating fish according to the present disclosure.

### DETAILED DESCRIPTION OF EXAMPLES

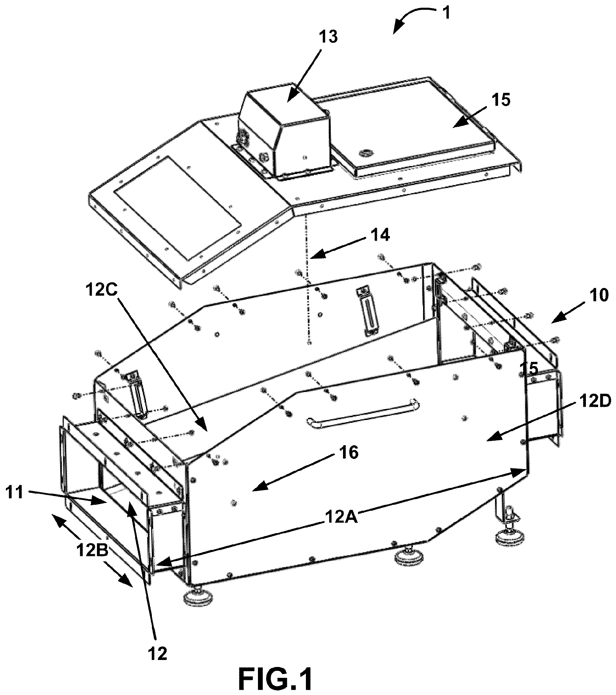

Figure 1 depicts a fish estimation apparatus for counting fish 1 in an exploded view, according to an example of the present disclosure, the apparatus having an inlet 10 for feeding fish into the apparatus, and an outlet 11 for discharging fish from the apparatus. Furthermore, inlet 10 and outlet 11 are connected by a sliding platform 12. In this example, the sliding platform is made of plastic, but it may be made of other material such as, for example, anodized aluminum or stainless steel. The sliding platform has an inclination of 8 degrees from the direction of the gravity, thus being configured to allow fish to slide by gravity from the inlet 10 and the outlet 11.

The sliding platform 12 comprises a length 12A and a width 12B, the length being defined along a direction from the inlet 10 to the outlet 11. Furthermore, sliding platform 12 also comprises two side walls 12C and 12D extending in the length direction, the width of the sliding platform being defined by the two side walls (in the figure, one sidewall 12C can be seen, and the other 12D is seen from the outside). Also, sliding platform 12 comprises an unobstructed sliding surface 16 spanning the width of the sliding platform 12 and configured to allow unrestrained movement of fish in the length direction and in the width direction of the sliding platform 12. In this figure, the view of the sliding surface 16 is blocked by the external part of side wall 12D.

Figure 1 further depicts a video camera 13 (in the figure, covered by a cover box) arranged overlooking the sliding platform 12 such that the field of view of the video camera spans across the whole width of the unobstructed sliding surface. The video camera, in this example, is arranged on a lid 15 covering the sliding platform, the lid being depicted in an exploded view. The lens of the video camera 13 points towards the sliding surface 16 of the sliding platform 12, in such a way that the optical axis 14 of the camera 13 is substantially perpendicular to the sliding surface 16.

The apparatus 1 also comprises a controller device (not depicted) configured to obtain a video sequence from the video camera 13 and determine an estimation of a number of fish sliding along the sliding platform 12, based on the obtained video sequence.

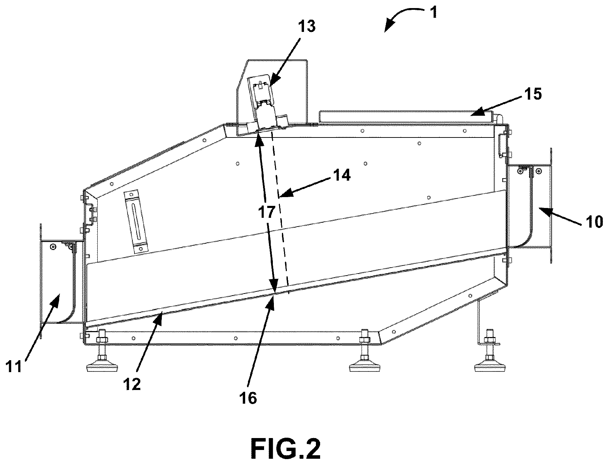

Figure 2 depicts a cross-section of the fish estimation apparatus 1 of the example of figure 1, in a view wherein the lid 15 is mounted on the apparatus. As seen in the figure, in this example, the optical axis 14 of the camera 13 is substantially perpendicular to the sliding surface 16 of sliding platform 12. Furthermore, in this example, the camera 13 is placed at a height 17 of 35cm above the zenith direction of the sliding surface 16. This way the camera's field of view spans the entire width 12B of the sliding platform 12, and a sufficient portion of the length 12A to capture an optimal number of frames (of a video sequence) of each fish, allowing, in use, to identify and track the fish sliding through the sliding platform 12.

Furthermore, in the apparatus of the example depicted in figures 1 and 2, the camera 13 has a fisheye lens which allows the camera's field of view to cover the whole width 12B of platform 12, while having a height 16 from the camera 13 to the sliding platform 12 of 35cm, thus reducing the overall size of the apparatus.

However, using such lens implies that the obtained images are deformed at the contours of the image. This deformation adds error to a subsequent biomass estimation. This deformation can be corrected analytically, but this implies that the processor must perform a much larger number of calculations in real time, which reduces its ability to process images, and therefore the quality of the results.

In order to avoid such computational cost in real time, the camera comprises a wide-angle lens that minimizes the deformation of the image edges.

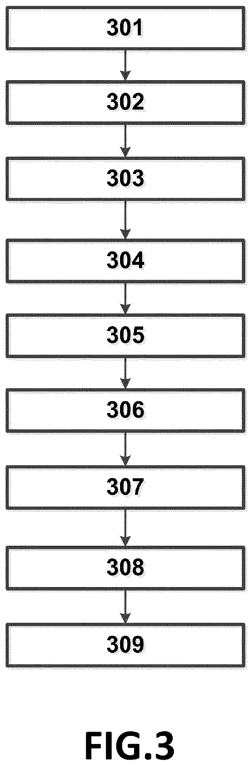

Figure 3 depicts a diagram block of an example of a method for estimating fish according to the present disclosure. The method for estimating fish is performed using the example of the fish estimation apparatus 1 depicted in figures 1 and 2, and it estimates the number of fish passing the sliding platform of the apparatus 1, and also estimates the total biomass of the estimated number of fish.

The total biomass of the estimated number of fish may be defined as the total mass (for example, in kilograms) of all the counted fish.

In step 301, the fish estimation apparatus 1 is arranged between two pools of a fish farm. A hose with a pump is connected on one end to a first pool comprising fish (in this example, the counting and biomass operations are done with "small" fish, weighing less than 1.5 kg). The other end of the hose is further connected to the inlet of the fish estimation apparatus 1. The pump is configured to pump fish and water from the first pool into the inlet of the apparatus 1. Also, the outlet of the apparatus 1 is connected through a second hose to a second pool.

In step 302, fish is provided at the inlet of the apparatus by means of activating the pump, the fish being transported from the first pool into the inlet of the apparatus, the fish subsequently sliding down the sliding platform, through the sliding surface, and out of the apparatus through the outlet of the apparatus 1, and into the second pool.

In step 303, the controller activates the video camera to obtain a video sequence while the fish are sliding through the sliding surface.

In step 304, the controller sends the obtained video sequence to a calculation module of the controller, the calculation module comprising an Object Detection Machine Learning algorithm (ODML).

In step 305, the ODML algorithm preprocesses the video sequence by dividing it into individual frames at a specific frame rate. A normalization of the images is performed, and the specific class "fish" is set to perform the counting.

In step 306, the ODML algorithm is run on each frame. As a result of running the ODML algorithm, the ODML algorithm outputs, for each frame, the number of detected objects with their corresponding bounding boxes, confidence scores, and class labels within each frame.

In step 307, a post-processing of the frames is performed, wherein a Tracking algorithm is run across groups of frames. The Tracking algorithm associates detected fish in one frame with fish in subsequent frames to ensure accurate counting (i.e., avoiding counting a single fish more than one time).

In step 308, the estimating the number of fish is performed by counting the detected fish, based on the detected fish on each frame and the Tracking algorithm recognition of the same fish within a group of frames. This is performed by using unique IDs assigned to detected fish during the run of the Tracking algorithm.

In step 309, an estimation of the biomass of each fish with a uniquely assigned ID is performed. The estimation of the biomass is performed by selecting, for each uniquely identified fish, the frame having the fish most clearly defined depiction. Then, for each selected frame, counting the number of pixels of the corresponding uniquely identified fish. Then, the selected frame and the corresponding number of pixels are used as an input for a machine learning algorithm pretrained to estimate biomass of fish based on a training data set of frames of fish, their corresponding area and weight. The machine learning algorithm performs the estimation of biomass using the obtained set of frames as an input data set, and the output is a total amount of biomass, which comprises the accumulated estimated biomass for each uniquely identified fish.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. Fish estimation apparatus for counting fish, the apparatus comprising:
- an inlet for feeding fish into the apparatus;
- an outlet for discharging fish from the apparatus;
- a sliding platform connecting the inlet and the outlet, wherein:
• the sliding platform is configured to allow fish to slide by gravity from the inlet and the outlet;
• the sliding platform comprises:
▪ a length and a width, the length being defined along a direction from the inlet to the outlet;
▪ two side walls extending in the length direction, the width of the sliding platform being defined by the two side walls;
▪ an unobstructed sliding surface spanning the width of the sliding platform and configured to allow unrestrained movement of fish in the length direction and in the width direction of the sliding platform; and
- a video camera arranged overlooking the sliding platform such that the field of view of the video camera spans across the whole width of the unobstructed sliding surface; and
- a controller device configured to:
• obtain a video sequence from the video camera; and
• determine an estimation of a number of fish sliding along the sliding platform, based on the obtained video sequence.

2. The fish estimation apparatus according to claim 1, wherein the unobstructed sliding surface allows unrestrained movement of fish in all the length direction of the sliding platform.

3. The fish estimation apparatus according to any one of claims 1 or 2, wherein the unobstructed sliding surface allows unrestrained movement of fish in all the width direction of the sliding platform.

4. The fish estimation apparatus according to any one of claims 1 to 3, wherein the optical axis of the camera is substantially perpendicular to at least part of the sliding surface.

5. The fish estimation apparatus according to any one of claim 1 to 4, wherein the determining of an estimation of the number of fish is performed by a machine learning algorithm pretrained to estimate a number of fish based on a training data set of video sequences of fish, the machine learning algorithm performing the estimation of the number of fish using the obtained video sequence as an input data set.

6. The fish estimation apparatus according to claim 5, wherein the machine learning algorithm is an Object Detection type Machine Learning Algorithm.

7. The fish estimation apparatus according to any one of claims 1 to 6, wherein the sliding platform has an inclination of at least 5° relative to a surface substantially perpendicular to the gravity direction.

8. The fish estimation apparatus according to any one of claims 1 to 7, wherein the video camera has a focal length of 35mm or shorter.

9. The fish estimation apparatus according to any one of claims 1 to 8, wherein the sliding surface is arranged at a distance from the inlet, the distance being at least a third of the length of the sliding platform.

10. The fish estimation apparatus according to any one of claims 1 to 9, further comprising a cleaning device configured to clean the lens of the video camera.

11. Method for estimating fish comprising the steps of:
- providing a fish estimation apparatus according to any one of claims 1 to 10;
- providing fish at the inlet of the apparatus;
- estimating a number of fish sliding down the sliding platform.

12. The method for estimating fish according to claim 11, further comprising estimating the biomass of the estimated fish, the estimation of the biomass comprising the steps of:
- Obtaining a set of frames from the obtained video sequence, the set of frames corresponding to the estimated fish;
- Calculating an area of the obtained frames corresponding to the estimated fish;
- Estimating the biomass of the estimated fish based on the calculated area.

13. The method for estimating fish according to claim 12, wherein the calculating of an area of the obtained frames is performed by counting the number of pixels of one or more of the frames of the set of frames, the pixels corresponding to the estimated fish.

14. The method for estimating fish according to any one of claims 12 or 13, wherein the estimating of the biomass of the estimated fish is performed using a regression model.

15. The method for estimating fish according to claim 14, wherein the regression model is a machine learning algorithm pretrained to estimate biomass of fish based on a training data set of frames of fish, the corresponding area and weight of the fish, the machine learning algorithm performing the estimation of biomass using the obtained set of frames as an input data set.
